## Europäisches Patentamt
## European Patent Office
## Office européen des brevets

(19)

(11) Veröffentlichungsnummer: **0 006 557**
**B1**

(12) **EUROPÄISCHE PATENTSCHRIFT**

(45) Veröffentlichungstag der Patentschrift: **11.08.82**

(21) Anmeldenummer: **79101984.7**

(22) Anmeldetag: **18.06.79**

(51) Int. Cl.³: **C 08 J 5/04, C 08 L 75/08, B 32 B 27/00, A 63 C 5/12**

(54) **Verfahren zur Herstellung von glasfaserverstärkten Kunststoffschichten und deren Verwendung bei der Konstruktion von Sandwichbauteilen.**

(30) Priorität: **01.07.78 DE 2829056**

(43) Veröffentlichungstag der Anmeldung:
**09.01.80 Patentblatt 80/1**

(45) Bekanntmachung des Hinweises auf die Patenterteilung:
**11.08.82 Patentblatt 82/32**

(84) Benannte Vertragsstaaten:
**AT CH DE FR IT**

(56) Entgegenhaltungen:
**DE - A - 2 164 381**
**FR - A - 2 130 758**
**GB - A - 1 139 114**
**NL - A - 6 903 236**
**US - A - 3 309 861**
**US - A - 3 551 539**
**US - A - 3 879 245**

Die Akte enthält technische Angaben die nach dem Eingang der Anmeldung eingereicht wurden und die nicht in dieser Patentschrift enthalten sind.

(73) Patentinhaber: **BAYER AG**
**Zentralbereich Patente, Marken und Lizenzen**
**D-5090 Leverkusen 1, Bayerwerk (DE)**

(72) Erfinder: **Heine, Heinrich, Ing.-Grad.**
**Müritzstrasse 38**
**D-5090 Leverkusen 1 (DE)**

## Verfahren zur Herstellung von glasfaserverstärkten Kunststoffschichten und deren Verwendung bei der Konstruktion von Sandwichbauteilen

Die Erfindung betrifft ein verbessertes Verfahren zur Herstellung von glasfaserverstärkten Schichten aus Kunststoff ("GFK") auf Basis von nicht zelligem Polyurethan sowie deren Verwendung bei der Konstruktion von Sandwichbauteilen, insbesondere Skiern.

Sandwichbauteile werden bekanntlich aus leichten, weniger fester Kernmaterialien als Abstandshalter und festen Deckschichten hergestellt. Dabei haben sich als Kernmaterial unter anderem verschiedene Hölzer, harte Kunststoffschäume, z.B. aus Polyurethan ("PUR"), Polystyrol oder PVC bzw. wabenförmige Materialien (z.B. auf Basis von Papier, Glasfaser oder Kunststoff) bewährt. Als tragende Deckschichten werden gemäß Stand der Technik im allgemeinen Metallfolien oder glasfaserverstärkte Platten aus ungesättigten Polyesterharzen oder aus Epoxidharzen verwendet.

GFK-Deckschichten auf Basis von noch nicht voll ausgehärteten Polyesterharzen können im Handauflege-, Vakuumsack- oder Preßverfahren direkt auf das Kernmaterial auflaminiert werden.

Der Fertigungsaufwand bei diesen Verfahren ist jedoch groß, so daß hohe Kosten anfallen. Eine Automation der Arbeitsabläufe ist mit Ausnahme des Preßverfahrens, welches nur bei kleineren Werkstücken geeignet ist, schwierig.

Es ist auch möglich, vorgefertigte, bereits gehärtete Deckschichten auf das Kernmaterial zu kleben. Als Kleber werden in diesem Zussammenhang meist Zweikomponentenkleber auf Basis von Epoxidharzen bzw. Polyurethanharzen verwendet oder auch Einkomponentenkleber auf Basis von Polychloropren bzw. Polyurethan.

Ein Nachteil dieser Arbeitsweise ist jedoch, daß die Haftfestigkeit zwischen den als Klebern verwendeten Materialien und den glasfaserverstärkten Deckschichten aus Polyester- oder Epoxidharz nicht besonders hoch ist, so daß sie oft den in der Praxis gestellten Anforderungen nicht genügt.

Als Deckschichten werden bei der Herstellung der Laminate auch häufig vor imprägnierte, nicht voll ausgehärtete Materialien, sogenannte "Prepregs", aus Epoxidharz verwendet. Prepregs sind Flächengebilde aus faserverstärktem Kunststoff, deren Kunststoffmatrix im "B-Zustand" ist. B-Zustände sind dadurch gekennzeichnet, daß der als Bindemittel für die Fasern dienende Kunststoff bereits fest ist, aber nochmals aufgeschmolzen bzw. in einem Lösungsmittel gelöst werden kann.

Der Nachteil dieses Verfahrens besteht darin, daß die laminierten Bauteile zur Aushärtung des Epoxidharzes anschließend einer Wärmebehandlung unterzogen werden müssen, was technisch aufwendig und damit nicht sehr wirtschaftlich ist.

Zum Stand der Technik gehört auch die Herstellung von glasfaserverstärkten Polyurethan-Kunststoffen (siehe z.B. DE—OS 2 164 381, DE—OS 2 014 899 und US—PS 3 678 009 sowie das Standard-Werk von P. H. Selden, "Glasfaserverstärkte Kunststoffe", Springer-Verlag Berlin, 1967).

Glasfaserverstärkte Flächengebilde auf Polyurethanbasis, welche durch Imprägnierung von Glasfasermatten mit Reaktionsgemischen aus Polyisocyanaten und höhermolekularen Polyhydroxylverbindungen unter anschließender Aushärtung durch Erhitzen hergestellt werden, sind in US—PS 3 061 497, US—PS 3 730 936, GB—PS 1 139 114 und GB—PS 1 226 843 beschrieben. Der wesentliche Nachteil all dieser Verfahren liegt darin, daß die den Glasfasern immer anhaftende Feuchtigkeit infolge Reaktion mit dem Polyisocyanat zur Blasenbildung im Produkt führt. Wegen des auf diese Weise um die Faser herum entstandenen Schaums sind diese Schichten hohen Festigkeitsansprüchen nicht gewachsen. Besonders macht sich das bei der dynamischen Beanspruchung bemerkbar. Die Wechselfestigkeit ist gering. Nachteilig ist auch, daß bei der Härtung im allgemeinen bei relativ hohem Druck gearbeitet wird.

Auch in der US-Patentschrift 3309861 werden entweder NCO-Prepolymere mit vorzugsweise aromatischen Diaminen in relativ verdünnten Lösungen oder Schmelzen von Polyurethanen zur Beschichtung von Glasfidsersträngen oder Glasfasermatten verwendet. Bei der Verwendung von NCO-Prepolymeren und aromatischen Diaminen als Kettenverlängerungsmittel wird — selbst bei der Anwendung von sterisch gehinderten Aminen entsprechend den Beispielen 3—8-eine nur sehr kurze Topfzeit der Imprägniermasse erhalten. Bei Verwendung von Gemischen aus NCO-Prepolymeren und aromatischen Diaminen als Schmelzreaktionsmischung zur Imprägnierung von Glasfasermatten muß die Form unter Druck für relativ lange Zeit gehärtet werden. Die Nachteile dieses Vorgehens liegen darin, daß abgesehen von der kurzen Topfzeit und der langen Nachheizzeit zur Durchreaktion der im wesentlichen linearen Polyurethane, durch die den Glasfasern immer anhaftende Feuchtigkeit eine Reaktion mit den NCO-Gruppen unter Blasenbildung vorzugsweise in der Nähe der Glasfasern eintritt. Wegen des auf diese Weise um die Faser herum entstandenen schaumartigen Produktes sind solche Schichten hohen Festigkeitsansprüchen nicht gewachsen.

In der NL—A 6903236 werden Glas-, Nylon-, Polyester-, Zellulose- und ähnliche Gewebe mit Polyurethanprepolymeren mit einem Isocyanatgehalt von 10—60% in Form von 10—75%igen Lösungen in aromatischen Kohlenwasserstoffen, Estern, Ketonen und Chlorverbindungen von Alkoholen, zusammen mit Härtungskatalysatoren wie Zinndilaurat getränkt und durch Feuchtigkeit aus der Luft vernetzt. Beim Verdunsten des Lösungsmittels tritt eine Härtungsreaktion ein. Die mit Katalysatoren versetzten NCO-Prepolymerlösungen entsprechend der niederländischen Patentanmeldung weisen eine geringe Topfzeit von maximal 2 Stunden auf, wenn man mit Zinndibutyldilaurat als Katalysator arbeitet. Andererseits sind die Härtungszeiten für die Wasserverlängerung des NCO-Prepolymeren und die Abtrocknungszeit zur Entfernung der Lösungsmittel unpraktikabel hoch.

Ein Reaktionsbeschleunigung bei wasserhärtenden NCO-Prepolymeren durch Trocknung zwischen z.B. 100 und 180°C ist nicht möglich, da unter obigen Bedingungen die Feuchtigkeit aus dem System ausgetrieben würde, andererseits aber gerade Wasser als Vernetzer erforderlich ist.

Der vorliegenden Erfindung liegt die Aufgabe zugrunde, glasfaserverstärkte Schichten aus Polyurethanharzen für die Konstruktion von Sandwichbauteilen, insbesondere Skiern, zur Verfügung zu stellen, die sich durch hohe statische und dynamische Festigkeiten auszeichnen und die mit den benachbarten Sandwichbauteilen einfach und fest zu verbinden sind.

Die Aufgabe wird erfindungsgemäß dadurch gelöst, daß man als Bindemittel für die Glasfasergewebe, -gelege, -vliese bzw. ähnliche Glasfaserformationen ein Polyurethan-Reaktiv-system einsetzt, welches in einem relativ niedrigsiedenden inerten organischen Lösungsmittel gelöst ist.

Gegenstand der Erfindung ist somit ein Verfahren zur Herstellung von glasfaserverstärkten Schichten aus nichtzelligem Polyurethan durch Tränken einer flächenförmigen Glasfaserformation mit einem Reaktivsystem, bestehend aus

A) einem organischen Polyisocyanat,

B) einer organischen Polyhydroxylverbindung, sowie gegebenenfalls

C) weiteren gegenüber Isocyanaten reaktiven Verbindungen, unter anschließender Aushärtung des Reaktivsystems bei erhöhter Temperatur, welches dadurch gekennzeichnet ist, daß die organische Polyhydroxylverbindung B) ein mittleres Molekulargewicht von 350 bis 3 000 und eine mittlere Funktionalität von 2,5 bis 3,5 aufweist und daß man das Reaktivsystem in Form einer 50 bis 90 gew.-%igen, vorzugsweise 60 bis 80 gew.-%igen Lösung in einem oder mehreren gegenüber Isocyanaten inerten organischen Lösungsmitteln mit einem Siedepunkt unter 150°C, vorzugsweise unter 115°C, besonders bevorzugt unter 85°C, anwendet.

Gegenstand der Erfindung ist auch die Verwendung der so hergestellten glasfaserverstärkten Kunststoffschichten als Deckschichten bei der Konstruktion von Sandwichbauteilen, insbesondere Skiern.

Aufgrund der bisherigen Erfahrungen war nicht zu erwarten, daß ein Verbundmaterial aus Glasgewebe und Polyurethan blasenfrei herstellbar ist. Wie oben erwähnt, reagieren die Isocyanate, die für die Herstellung von Polyurethanen als Reaktionskomponente benötigt werden, mit dem der Glasfaser anhaftenden Wasser unter Schaumbildung, was auch bei Einsatz der üblichen wasserabsorbierenden Zusätze nicht zu vermeiden ist, da das Isocyanat unter den Verarbeitungsbedingungen mit dem Wasser schneller als mit dem Polyol reagiert und in der kurzen Reakionszeit das wasserabsorbierende Mittel nicht ausreichend wirksam werden kann.

Es ist als überraschend anzusehen, daß dieses Problem durch die erfindungsgemäße Mitverwendung von relativ niedrigsiedenden Lösungsmitteln gelöst werden kann: Derartige Lösungsmittel sind nämlich in aller Regel nicht in der Lage, das fertig ausreagierte Polyurethanharz zu lösen, so daß der Fachmann annehmen mußte, daß man beim erfindungsgemäßen Verfahren keine kompakten, blasenfreien Flächengebilde sondern vielmehr — in Analogie zur technischen Lehre der DE—AS 1 694 180 (US—PS 3 582 396) — mikroporöse Schichtstoffe erhalten würde.

Die erfindungsgemäß hergestellten blasenfreien glasfaserverstärkten Polyurethanschichten haben unter anderem den technischen Vorteil, daß sie hohe dynamische und statische Festigkeitswerte aufweisen. Der Grund hierfür ist die flächige direkte Überleitung der Kräfte zwischen Kunststoff und Glasfaser. Auch die Klebefestigkeiten solcher Schichten aus glasfaserverstärktem Polyurethanharz sind bei Verwendung von Zweikomponentenklebern, z.B. auf Epoxid- oder Polyurethanharzbasis, ausgezeichnet, so daß eine einmal aufgeklebte Schicht nicht mehr ohne Zerstörung von ihrer Unterlage zu trennen ist. Günstig ist auch, daß das gelöste Polyurethan-Reaktivsystem (insbesondere bei Verwendung an sich bekannter Reaktionsbeschleuniger) gegebenenfalls schon bei Raumtemperatur auszuhärten beginnt. So können bei zügiger Verarbeitung des Materials eventuell aufgetretene Eigenspannungen noch vor der vollständigen Aushärtung sich abbauen, was wiederum die Haltbarkeit des Fertigproduktes verbessert.

Gemäß einer besonderen Ausführungsform des erfindungsgemäßen Verfahrens wird nach dem Verdampfen des Lösungsmittels die Härtungsreaktion nicht zu Ende geführt sondern durch Kühlen auf unter −20°C abgebrochen, so daß sich — in Analogie zu den oben diskutierten Epoxidharzen — ein B-Zustand ausbildet, worauf man das noch klebrige Material bis zur Weiterverarbeitung auf beiden Seiten mit jeweils einer abziehbaren Folie bedeckt.

Für den Fachmann war überraschend, daß eine solche Unterkühlung den Aushärtungsprozeß nur unterbricht, ohne ihn generell zu ändern. Nach einer Erwärmung, z.B. auf Raumtemperatur, kann nach Abzug der Schutzfolie die klebrige Oberfläche der Schicht durch leichtes Andrücken fest mit der zu laminierenden Unterlage verbunden werden, um dann weiter auszuhärten. Ein Entfernen der Schicht ist anschließend nicht mehr möglich.

Eine solche Arbeitsweise ist für den Verarbeiter besonders vorteilhaft, da die Prepregs vorgefertigt und bevorratet werden können. Eine direkte Berührung mit dem Harz bleibt dem Verwender erspart, auch entstehen während der Verarbeitung keine Dämpfe oder Gase. Das Prepreg ist also umweltfreundlich. Darüber hinaus können, wie bereits erwähnt, Ausgangskomponenten verwendet werden, mit denen sich kalthärtende Systeme formulieren lassen.

Das erfindungsgemäße Verfahren wird so ausgeführt, daß man ein Glasfasergewebe, -gelege, -vlies bzw. ähnliche Glasfaserformationen mit dem in einem Lösungsmittel gelösten Polyurethan-Reaktivsystem tränkt und anschließend unter Trocknung, vorzugsweise bei einer Temperatur von 100 bis 180°C, härtet, wobei wasserabsorbierende Zusätze nicht erforderlich sind. Die Fertigungsanlagen sind technisch nicht aufwendig, so daß das Verfahren sehr wirtschaftlich ist, zumal sich auch das Lösungsmittel rückgewinnen läßt.

In einer besonderen Variante des erfindungsgemäßen Verfahrens wird das getränkte Glasfasermaterial nach der Abdunstung des Lösungsmittels und vor der vollen Aushärtung des Polyurethanharzes auf beiden noch klebrigen Seiten mit Folien bedeckt und zur Unterbrechung des Härtungsprozesses in einem Kühlraum bei Temperaturen zwischen vorzugsweise −20 und −40°C zur Weiterverarbeitung zwischengelagert.

Es war überraschend, daß schon bei −20°C keine nennenswerte Aushärtung mehr eintritt, obgleich in der Praxis dem Fachmann die Verarbeitung von Polyurethanharz gerade auch bei niedrigen Temperaturen empfohlen wird. Weiter ist erstaunlich, daß schon durch die erste Reifung der ungünstige Einfluß des Wassers ausgeschieden wird, so daß später auch das Endprodukt blasenfrei ist. Wichtig ist jedoch, daß das Lösungsmittel vor dem Einfrieren verdampft wird. Dadurch wird erreicht, daß trotz Auftragens mehrere Schichten keine Lösungsmittelreste eingeschlossen werden, die später Blasen bilden könnten.

Im erfindungsgemäßen Verfahren werden die an sich bekannten Polyhydroxylverbindungen und Polyisocyanate eingesetzt, die in einem nicht reaktiven Lösungsmittel gelöst sind, und die gegebenenfalls Flammschutzmittel sowie weitere übliche Zusatzmittel enthalten können.

Als Polyhydroxylverbindungen kommen im Prinzip alle an sich bekannten, mindestens zwei Hydroxylgruppen aufweisenden Verbindungen vom Molekulargewicht 62 bis ca. 10 000, insbesondere 62 bis 5 000, in Frage, z.B. mindestens 2, vorzugsweise 2,5 bis 3,5, besonders bevorzugt im Mittel ca. 3 Hydroxylgruppen aufweisende Polyester, Polyether, Polythioether, Polyacetale, Polycarbonate und Polyesteramide, mit Molekulargewichten von vorzugsweise 350 bis 3 000, wie sie sowohl für die Herstellung von homogenen als auch zellförmigen Polyurethanen an sich bekannt sind.

Die in Frage kommenden Hydroxylgruppen aufweisenden Polyester sind z.B. Umsetzungsprodukte von mehrwertigen, vorzugsweise zwei- und dreiwertigen, Alkoholen mit mehrwertigen, vorzugsweise zweiwertigen Carbonsäuren.

Anstelle der freien Carbonsäuren können jedoch auch die entsprechenden Polycarbonsäureanhydride, Polycarbonsäureester oder Gemische von mehreren Verbindungen zur Herstellung der Polyester verwendet werden. Die Polycarbonsäuren können aliphatische, cycloaliphatische, aromatische und heterocyclische Verbindungen sein, die gegebenenfalls, z.B. durch Halogenatome, substituiert und/oder ungesättigt sind. Als einzelne Vertreter hierfür seien beispielhaft genannt: Bernsteinsäure, Adipinsäure, Sebazinsäure, Maleinsäuredimethylester etc. Als Polyolkomponenten kommen z.B. Ethylenglykol, Propylen-glykol-(1,3), Butylenglykol-(1,4) und -(2,3), Glyzerin, Trimethylolethan, Pentaerythrit, Mannit und Sorbit, Methylenglykosid, ferner Polyethylenglykole, Polypropylenglykole, Polybutylenglykole in Frage.

Auch die erfindungsgemäß in Frage kommenden, vorzugsweise 3 Hydroxylgruppen aufweisenden Polyether sind solche der an sich bekannten Art und werden z.B. durch Polymerisation von Epoxiden, wie Ethylenoxid, Propylenoxid, Butylenoxid, Styroloxid oder Epichlorhydrin, gegebenenfalls an Startkomponenten mit reaktionsfähigen Wasserstoffatomen, wie z.B. Alkoholen oder Aminen, z.B. Glycerin, Trimethylolpropan, Ethylenglykol, 4,4'-Dihydroxy-2,2-Diphenylpropan, Anilin, Ammoniak, Ethanolamin, Ethylendiamin hergestellt. Auch Sucrosepolyether kommen erfindungsgemäß in Frage. Bevorzugt sind auf Polyolen, insbesondere Triolen, gestartete Polypropylenoxidpolyäther, welche anteilsweise aber auch Äthylenoxid enthalten können.

Vertreter der erfindungsgemäß zu verwendenden Polyhydroxylverbindungen sind z.B. in Saunders-Frisch, "Polyurethanes, Chemistry and Technology", Band I und II, Interscience Publishers 1962 und 1964 (Seite 32 ff Band I und Seite 5 und Seite 198 ff Band II) sowie im Kunststoff-Handbuch, Band VII, Vieweg-Höchtlen, Carl-Hanser-Verlag, München 1966, z.B. auf den Seiten 45—71, beschreiben. Auch niedermolekulare Polyhydroxylverbindungen, z.B. der bereits genannten Art und/oder andere übliche Kettenverlängerungsmittel wie z.B. Diamine können anteilmäßig mitverwendet werden. Dies ist jedoch weniger bevorzugt.

Um optimal harte Polyurethane zu erhalten, werden bevorzugt trifunktionelle, Hydroxylgruppen aufweisende Verbindungen der OH-Zahl 350—800 eingesetzt. Es können jedoch auch anteilig di- und/oder höherfunktionelle Polyhydroxylverbindungen mitverwendet werden.

Als Ausgangskomponenten kommen erfindungsgemäß ferner die an sich bekannten aliphatischen, cycloaliphatischen, araliphatischen und aromatischen Polyisocyanate in Betracht, beispielsweise 1,4-Tetramethylendiisocyanat, 1,6-Hexamethylendiisocyanat, 1,12-Dodecandiisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 1,3- und 1,4-Phenylendiisocyanat, 2,4- und 2,6-Tolulendiisocyanat sowie beliebige Gemische dieser Isomeren, 2,4- und 2,5-Hexahydrotoluylendiisocyanat sowie beliebige Gemische dieser Isomeren, Diphenylmethan-4,4'-diisocyanat, Diphenylmethan-2,4'-diisocyanat, Triphenylmethan-4,4',4''-triisocyanat sowie bevorzugt technische Polyphenyl-polymethylenpolyisocyanatgemische, wie sie durch Anilin-Formaldehyd-Kondensation und anschließende Phosgenierung erhalten werden; geeignet sind auch die aus der Polyurethanchemie an sich bekannten, Allophanat- oder Biuretgruppen aufweisenden Isocyanate, wie sie durch Umsetzung von Polyolen bzw. Wasser oder Polyaminen mit einem Überschuß der genannten Polyisocyanate erhalten wurden. Auch Umsetzungsprodukte aus den oben beschriebenen höhermolekularen Polyhydroxylverbindungen und überschüssigen Mengen an Polyisocyanat (sogenannte NCO-Präpolymere) können im erfindungsgemäßen Verfahren als Isocyanatkomponente verwendet werden.

Selbstverständlich ist es auch möglich, beliebige Mischungen der obengenannten Polyisocyanate zu verwenden.

Als Lösungsmittel kommen alle mit Isocyanaten nicht reagierende übliche Lösungsmittel mit Siedepunkten unter 150°C, vorzugsweise unter 115°C, besonders bevorzugt unter 85°C, in Frage, z.B. gegebenenfalls halogensubstituierte aliphatische und aromatische Kohlenwasserstoffe, Ketone, Äther und Ester. Alkohole entfallen wegen ihrer Reaktion mit Isocyanaten. Besonders bevorzugt sind Ketone wie Aceton und Methyläthylketon; darüber hinaus seien auch Toluol, Äthylacetat, Diisopropyläther, Äthylenglykolmonomethylätheracetat und Ligroin genannt.

Als Verstärkungsmaterialien kommen Glasfasern mit unterschiedlichem Durchmesser und in unterschiedlicher Verarbeitungsform, z.B. als Glasfaserroving, Glasfasermatte, Glasfaservlies, Glasfasergewebe mit gleicher oder unterschiedlicher Glasmenge in Kett- und Schußrichtung und Glasfasergelege in Frage, wobei die Glasfasern mit Ausnahme des Rovings als Endlosfasern oder als Stapelfasern vorliegen können. Zusätzlich sind auch andere Verstärkungsfasern auf anorganischer Basis wie z.B. Asbest-, Ton- und andere Mineralfasern, Kohlenstoffasern, Borfasern, $Al_2O_3$-Fasern, Whisker und Metallfasern möglich.

Mit den erfindungsgemäß hergestellten Deckschichten können Sandwichkerne aus Schaumstoffen auf Basis der verschiedensten Kunststoffe belegt werden, wie z.B. Polyurethan, Epoxidharz, Polystyrol, Polyester, ABS, Polycarbonat oder Polyamid (bevorzugt Polyurethan); weiter kommen Wabenkerne aus Glas-, Papier- oder Phenolharzwaben in Betracht. Auch Kunststoffprofile, die im Extrusionsverfahren (insbesondere aus thermoplastischem ABS) hergestellt wurden oder Holz sind als Sandwichkerne bevorzugt geeignet.

Bei der Herstellung der Sandwichbauteile werden die verstärkten Deckschichten in üblicher Weise mit dem Kernmaterial verklebt, wobei die gebräuchlichen Zweikomponentenkleber auf Epoxidharz- oder Polyurethan- basis oder auch lösungsmittelhaltige Einkomponentenkleber auf Basis von Polychloropren oder Polyurethan verwendet werden können.

Anwendungsgebiete für diese Sandwichbauteile sind beispielsweise der Fahrzeugsektor, wobei Gehäuse, Türen und Aufbauten hergestellt werden können, weiter der Sportartikelsektor, z.B. Skier, Surfbretter oder Wasserskier und andere Gebrauchsartikel, die häufig dynamischen Belastungen ausgesetzt werden.

Die folgenden Beispiele dienen zur Erläuterung des erfindungsgemäßen Verfahrens. Wenn nicht anders vermerkt, sind Mengenangaben als Gewichtsteile bzw. Gewichtsprozente zu verstehen.

## Beispiel 1

Durch eine in einer Tränkwanne befindliche Reaktivlösung, bestehend aus 100 Teilen eines trifunktionellen Polypropylenoxidpolyethers auf Basis Trimethylolpropan mit einem OH-Gehalt von ca. 11%, 100 Teilen eines technischen Diphenylmethandiisocyanats mit einem NCO-Gehalt von 30—32% und einer Viskosität von 80—150 mPa.s 20°C und 85 Teilen Aceton wird ein Glasgewebe mit einem Flächengewicht von ca. 200 g/m² und nahezu gleicher Glasfasermenge in Kett- und Schußrichtung gezogen und somit imprägniert. Das Lösungsmittel wird durch Einhängen des imprägnierten Glasgewebes in einen Wärmeschrank mit einer Temperatur von ca. 160°C abgedunstet und gleichzeitig das Polyurethanharz gehärtet. Es entsteht ein Schichtstoff, mit einem Glasgehalt von ca. 40%, der eine glatte Oberfläche aufweist und nahezu keine Lufteinschlüsse enthält. Die Schicht wird auf einer Seite aufgerauht und auf eine in einer Plattenform in an sich bekannter Weise aus einem Polyetherpolyol, Treibmittel, Schaumstabilisator und Polyisocyanat hergestellten Integralschaumplatte, die ebenfalls aufgerauht wurde, aufgeklebt. Als klebematerial wird dabei ein Zweikomponentenkleber auf Epoxidharzbasis mit einem Aminhärter verwendet. Die Verklebung wird bei einer Temperatur von ca. 60°C und unter leichtem Druck von ca. 2 Kp/cm² ausgeführt; dabei härtet der Epoxidharzkleber innerhalb einer Stunde.

An dem so hergestellten Sandwichbauteil wurden folgende Eigenschaften gemessen:

| | | |
|---|---|---|
| 1 | Biegefestigkeit bei Raumtemperatur | 58,9 MPa (DIN 53 452) |
| | Durchbiegung beim Bruch | 5 mm (DIN 53 452) |

2. Haftfestigkeit der Deckschicht:
Dabei wurde die Deckschicht vorsichtig teilweise abgelöst und an einer Feder-Waage befestigt. Dann wurde im rechten Winkel zur Sandwichplatte versucht, die Deckschicht weiter abzulösen. Es zeigt sich, daß bei einer Kraft von ca. 2,5 kg bei einem 2 cm breiten Streifen die Eigenfestigkeit der Deckschicht erreicht war und daß diese riß, ohne sich weiter vom Untergrund abzulösen.

3. Die Sandwichstäbe wurden in eine Wechselbiegemaschine eingespannt und so belastet, daß die Dehnung der Randfasern in den Deckschichten 75% ihrer Reißdehnung beim Bruch erreichte. Mit dieser Amplitude wurden die Prüfkörper 10 000 mal belastet und anschließend die verbliebene Restbiegefestigkeit gemessen. Gegenüber dem Ausgangswert wurde ein Festigkeitsabfall von 38% gemessen.

Vergleichsbeispiel 1

Es wurde ein Sandwichbauteil hergestellt, das sich von dem in Beispiel 1 beschriebenen nur in der Harzmatrix für die Deckschichten unterschied. Verwendet wurde in diesem Fall ein flüssiges Epoxidharz auf Basis von Bisphenol A und Epichlorhydrin ($\eta$ 25°C = 12.000 mPa.s; Epoxidäquivalent = 192), das mit 4,4'-Diaminodiphenylmethan gehärtet wurde. In diesem Fall wurden an dem Sandwichbauteil folgende Werte gefunden:

1. Biegefestigkeit    55,9 MPa (DIN 53 452)
   Durchbiegung       3,5 mm . ,,

2. Lagenhaftung 1,5—1,8 Kp pro 2 cm Streifenbreite; die Deckschicht kann vollständig abgezogen werden.

3. Dynamische Versuche
   Nach dem Wechselbiegeversuch, bei dem die gleiche Auslenkung (Amplitude) wie bei Beispiel 1 gewählt wurde, beträgt die Restbiegefestigkeit nur noch 38% der Ausgangsfestigkeit, d.h. der Festigkeitsabfall ist 62%.

Das Arbeitsaufnahmevermögen des Sandwichbauteils mit Epoxidharz als Bindemittel in den GFK-Deckschichten ist also deutlich niedriger als bei vergleichbaren Sandwichbauteilen mit PUR-gebundenen GFK-Deckschichten.

Beispiel 2

In der gleichen Weise wie in Beispiel 1 beschrieben, wird eine spinngeteilte Glasfasermatte, die mit einem unlöslichen Binder versehen ist und eine Faserlänge von ca. 50 mm und ein Flächengewicht von 300 g/m² aufweist, in der in Beispiel 1 beschriebenen Reaktivlösung getränkt und im Trockenturm getrocknet und gehärtet. Es entsteht ein homogenes Einlagenlaminat mit einer relativ glatten Oberfläche ohne Lufteinschlüsse. Der Harzanteil dieses Laminates beträgt ca. 50%. Das Laminat wird auf einer Seite mit einem Sandstrahlgebläse aufgerauht und dann mittels eines Zweikomponentenklebers auf Epoxidharzbasis mit einem Aminhärter bei Raumtemperatur auf beide Seiten einer Balsaholzplatte mit einer Dicke von 15 mm geklebt.
Die so hergestellte Sandwichplatte weist folgende Eigenschaften auf:

1. Biegefestigkeit    27 MPa (DIN 53 452)
   Durchbiegung       6 mm  ·,,

2. Haftfestigkeit der Deckschicht:
   Deckschicht kann nicht definiert abgeschält werden; beim Auseinanderziehen der beiden Deckschichten tritt Materialbruch im Holz ein.

Vergleichsbeispiel 2

Analog zu Vergleichsbeispiel 1 wird eine Glasfasermatte mit einem Epoxidharz getränkt und gehärtet. Nach dem Aufkleben dieser EP-Deckschichten auf eine Balsaholzplatte mit dem gleichen Zweikomponenten-Epoxidharz-Klebstoff wie in Beispiel 2 wurden an diesem Sandwichteil die entsprechenden Prüfungen durchgeführt, wobei folgende Resultate erhalten wurden:

1. Biegefestigkeit    25 MPa
   Durchbiegung       4 mm

2. Haftfestigkeit der Deckschicht:
   Ein definiertes Abschälen der Deckschichten wird ebenfalls nicht erreicht; beim Auseinanderziehen der beiden Deckschichten löst sich jedoch das Epoxidharzlaminat vom Epoxidharzkleber.

## Beispiel 3

Durch eine in einer Tränkwanne befindliche Reaktivlösung, bestehend aus 100 Teilen eines trifunktionnellen Polypropylenoxidpolyäthers auf Basis von Trimethylolpropan mit einem OH-Gehalt von ca. 16,5% und einer Viskosität von ca. 1800 mPa.s/20°C, 150 Teilen eines technischen Diphenylmethandiisocyanats mit einem NCO-Gehalt von ca. 31% und einer Viskosität von 110 mPa.s/20°C und 110 Teilen Aceton wird ein Glasgewebe mit einem Flächengewicht von ca. 500 g/cm² und ca. 90% der Glasmenge in Kettrichtung — entsprechend 10% in Schußrichtung — gezogen und somit imprägniert. Das Lösungsmittel wird durch Durchziehen des imprägnierten Glasgewebes durch einen Trockenturm mit einer Temperatur von ca. 160°C entfernt und gleichzeitig das Polyurethanharz ausgehärtet. Es entsteht ein Einlagenlaminat mit relativ glatter Oberfläche und nahezu ohne Lufteinschlüsse. Der Glasgehalt beträgt bei diesem Laminat 62%. Das Laminat wird auf einer Seite aufgerauht und unter einem leichten Druck von ca. 2 Kp/cm² mit einem kalthärtenden Zweikomponentenkleber auf Epoxidharzbasis auf beide Seiten eines Sandwichkernes, der durch Zusammenkleben von extrudierten Thermoplast-Röhrchen und anschließendes Aufschneiden in Platten senkrecht zur Extrusionsebene erhalten wurde, aufgeklebt.

Nach der Aushärtung bei Raumtemperatur wurden an diesem Sandwichteil folgende Festigkeitswerte gemessen:

1. Biegefestigkeit      112 MPa (DIN 53 452)
   Druckbiegung      5,9 mm   „

2. Haftfestigkeit der Deckschicht:
   Ein definiertes Abschälen wird nicht erreicht; beim Auseinanderziehen der beiden Deckschichten löst sich der Epoxidharzkleber vom Sandwichkern.

## Vergleichsbeispiel 3

Mit dem in Vergleichsbeispiel 1 beschriebenen Epoxidharzgemisch wird ein Glasgewebe entsprechend Beispiel 3 imprägniert. Der Glasgehalt dieses Laminats beträgt 55%. Mit dem Laminat wird analog zu Beispiel 3 ein Sandwichbauteil hergestellt, an dem folgende Festigkeitswerte gemessen wurden:

1. Biegefestigkeit      103 MPa (DIN 53 452)
   Durchbiegung      4,1 mm · „

2. Haftfestigkeit der Deckschicht:
   Eine definiertes Abschälen wird nicht erreicht; beim Auseinanderziehen der beiden Deckschichten trennt sich das Epoxidharzlaminat vom Epoxidharzkleber.

## Beispiel 4
### (Vergleichsbeispiel zu Beispiel 1)

Aus 100 Teilen eines trifunktionellen Polypropylenoxidpolyethers auf Basis Trimethylolpropan mit einem OH-Gehalt von ca. 11%, 100 Teilen eines technischen Diphenylmethandiisocyanates mit einem NCO-Gehalt von 30—32% und einer Viskosität von 80—150 mPas/20°C und 10 Teilen eines Gemisches aus 50% Zeolith-Pulver und 50% Rizinusöl wird eine Polyurethanmischung hergestellt. Anschließend wird dieses Gemisch auf ein Glasgewebe mit einem Flächengewicht von ca. 200 g/m² und gleicher Glasfasermenge in Kett- und Schußrichtung gegossen und mit einem Kunststoffrakel gleichmäßig verteilt, wobei die Gießharzmischung des Glasgewebe vollständig imprägniert. In gleicher Weise werden noch weitere Glasgewebelagen aufgebracht, bis das Laminat eine Stärke von 4 mm hat. Daraufhin wird das Laminat mit einer mit Trennmitteln versehenen Stahlplatte abgedeckt. Nach der Härtung bei Raumtemperatur nach 24 Stunden wird die GFK-Platte entformt. Es zeigt sich, daß das Polyurethanharz in Verbindung mit der Glasfaser vollständig geschäumt ist. Eine Prüfung der Platte ergibt folgende Festigkeitswerte (im Klammern Werte einer vergleichsweise hergestellten GFK-Platte mit einem konventionellen kalthärtenden Epoxidharzsystem als Bindemittel).

Biegefestigkeit    (DIN 53 452) 251 (397) MPa
Druckfestigkeit    (ASTM D 695—63) 182 (347) MPa
Zugefestigkeit   (DIN 53 455) 209 (?55) MPa

## Patentansprüche

1. Verfahren zur Herstellung von glasfaserverstärkten Schichten aus nichtzelligem Polyurethan durch Tränken einer flächenförmigen Glasfaserformation mit einem Reaktivsystem, bestehend aus
A) einem organischen Polyisocyanat,
B) einer organischen Polyhydroxylverbindung
C) weiteren, gegenüber Isocyanaten reaktiven Verbindungen,

unter anschließender Aushärtung des Reaktivsystems bei erhöhter Temperatur, dadurch gekennzeichnet, daß die organische Polyhydroxyl-Verbindung B) ein mittleres Molekulargewicht von 350 bis 3 000 und eine mittlere Funktionalität von 2,5 bis 3,5 aufweist, und daß man das Reaktivsystem in Form einer 50 bis 90 Gew.-%igen Lösung in einem oder mehreren, gegenüber Isocyanaten inerten organischen Lösungsmitteln mit einem Siedepunkt unter 150°C anwendet.

2. Verfahren nach Anspruch 1, dadurch gekennzeichnet, daß das Lösungsmittel einen Siedepunkt unter 85°C aufweist.

3. Verfahren nach Anspruch 2, dadurch gekennzeichnet, daß als Lösungsmittel Aceton und/oder Methylethylketon verwendet werden.

4. Verfarhen nach Anspruch 1 bis 3, dadurch gekennzeichnet daß man das Reaktivsystem in Form einer 60—80 Gew.-%igen Lösung anwendet.

5. Verfahren nach Anspruch 4, dadurch gekennzeichnet, daß als Polyhydroxylverbindung ein trifunktionelles Polypropylenoxid mit einer OH-Zahl von 350 bis 800 verwendet wird.

6. Verwendung der gemäß Anspruch 1 bis 5 hergestellten glasfaserverstärkten Flächengebilde als Deckschichten bei der Konstruktion von Sandwichbauteilen, insbesondere Skiern.

## Revendications

1. Procédé de production de couches de polyuréthanne non cellulaire renforcées à la fibre de verre, par imprégnation d'un corps plan de fibres de verre avec un système réactif, constitué par
A) un polyisocyanate organique,
B) un composé polyhydroxylique organique,
C) d'autres composés réactifs envers des isocyanates,
avec durcissement subséquent du système réactif à température élevée, caractérisé en ce que le composé polyhydroxylique organique B) présente un poids moléculaire moyen de 350 à 3000 et une fonctionnalité moyenne de 2,5 à 3,5, et en ce qu'on utilise le système réactif sous la forme d'une solution à 50—90% en poids dans un ou plusieurs solvants organiques, inertes vis-à-vis d'isocyanates, de point d'ébullition inférieur à 150°C.

2. Procédé suivant la revendication 1, caractérisé en ce que le solvant présente un point d'ébullition inférieur à 85°C.

3. Procédé suivant la revendication 2, caractérisé en ce qu'on utilise comme solvant de l'acétone et/ou de la méthyléthylcétone.

4. Procédé suivant les revendications 1 à 3, caractérisé en ce qu'on utilise le système réactif sous la forme d'une solution à 60—80% en poids.

5. Procédé suivant la revendication 4, caractérisé en ce qu'on utilise comme composé polyhydroxylique un oxyde polypropylénique trifonctionnel ayant un indice d'hydroxyle de 350 à 800.

6. Utilisation des corps plans renforcés à la fibre de verre produits suivant les revendications 1 à 5 comme couches extérieures dans la construction d'éléments sandwich, notamment de skis.

## Claims

1. Process for the production of glass-fibre-reinforced layers of non-cellular polyurethane by impregnating a sheet-form glass-fibre formation with a reactive system consisting of
A) an organic polyisocyanate,
B) an organic polyhydroxyl compound and
C) other isocyanate-reactive compounds,
and subsequently hardening the reactive system at an elevated temperature, characterised in that the organic polyhydroxyl compound (B) has an average molecular weight of 350 to 3,000 and an average functionality of 2.5 to 3.5, and in that the reactive system is used in the form of a 50 to 90% by weight solution in one or more organic solvents inert to isocyanates and having a boiling point below 150°C.

2. Process according to Claim 1, characterised in that the solvent has a boiling point below 85°C.

3. Process according to Claim 2, characterised in that acetone and/or methylethyl ketone is/are used as the solvent.

4. Process according to Claim 1 to 3, characterised in that the reactive system is used in the form of a 60—80% by weight solution.

5. Process according to Claim 4, characterised in that a trifunctional polypropylene oxide having an OH-number of 350 to 800 is used as the polyhydroxyl compound.

6. Use of the glass-fibre-reinforced sheet-form structures produced in accordance with Claims 1 to 5 as surface layers in the construction of sandwich structures, particularly skis.